# EUROPEAN PATENT APPLICATION

(11) **EP 3 764 560 A1**
(43) Date of publication of application: **13.01.2021**
(21) Application number: 18909254.7
(22) Date of filing: 07.03.2018
(51) Int. Cl.: H04B 7/06, H04L 27/26

(54) **USER TERMINAL AND WIRELESS COMMUNICATION METHOD**

(71) Applicant: NTT DoCoMo, Inc., Tokyo 100-6150 (JP)
(72) Inventor: TAKEDA, Kazuki, Tokyo 100-6150 (JP); NAGATA, Satoshi, Tokyo 100-6150 (JP); UCHINO, Tooru, Tokyo 100-6150 (JP); WANG, Lihui, Beijing 100190 (CN); NA, Chongning, Beijing 100190 (CN); HOU, Xiaolin, Beijing 100190 (CN)
(74) Representative: Hoffmann Eitle
(86) International application number: PCT/JP2018/008875
(87) International publication number: WO 2019/171518

(57) **Abstract**

To determine an appropriate spatial resource for an uplink control channel. A user terminal includes a receiving section that receives, by a higher layer, a plurality of pieces of spatial relation information related to spatial resources for an uplink control channel, and receives, through a medium access control-control element, indication information indicating at least one piece of spatial relation information associated with at least one uplink control channel resource among the plurality of pieces of spatial relation information, and a control section that determines a partial band to which the indication information is applied, and controls transmission of an uplink control channel in the partial band by using the at least one piece of spatial relation information and the at least one uplink control channel resource.

## Description

### Technical Field

The present disclosure relates to a user terminal and a radio communication method in next-generation mobile communication systems.

### Background Art

For UMTS (Universal Mobile Telecommunications System) networks, the specifications of Long Term Evolution (LTE) have been drafted for the purpose of further increasing high speed data rates, providing lower latency, and so on (Non-Patent Literature 1). In addition, successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

In existing LTE systems (for example, LTE Rel. 8 to Rel. 13), downlink (DL) and/or uplink (UL) communications are carried out using 1 ms subframes (referred to as "transmission time intervals (TTIs)," and so on). This subframe is the unit of time to transmit one data packet that is channel-encoded, and is the unit of processing in scheduling, link adaptation, retransmission control (HARQ (Hybrid Automatic Repeat reQuest), and so on.

In existing LTE systems (for example, LTE Rel. 8 to Rel. 13), a user terminal transmits uplink control information (UCI) by using an uplink control channel (for example, a PUCCH (Physical Uplink Control Channel)) or an uplink data channel (for example, a PUSCH (Physical Uplink Shared Channel)). A structure (format) of the uplink control channel is referred to as a "PUCCH format (PF)," for example.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, LTE Rel. 14 or later versions, NR, 5G, or the like), it is studied to perform communications using beam forming (BF).

A user terminal determines a spatial resource (for example, a beam) and an uplink control channel resource and transmits an uplink control channel by using these resources. However, a problem of a reduction in communication quality and the like may occur unless the uplink control channel is transmitted by using an appropriate spatial resource.

In view of the above, an object of the present disclosure is to provide a user terminal and a radio communication method that can determine an appropriate spatial resource for an uplink control channel.

### Solution to Problem

A user terminal according to an aspect of the present disclosure includes a receiving section that receives, by a higher layer, a plurality of pieces of spatial relation information related to spatial resources for an uplink control channel, and receives, through a medium access control-control element, indication information indicating at least one piece of spatial relation information associated with at least one uplink control channel resource among the plurality of pieces of spatial relation information, and a control section that determines a partial band to which the indication information is applied, and controls transmission of an uplink control channel in the partial band by using the at least one piece of spatial relation information and the at least one uplink control channel resource.

### Advantageous Effects of Invention

According to an aspect of the present disclosure, it is possible to determine an appropriate spatial resource for an uplink control channel.

### Brief Description of Drawings

FIG. 1 is a diagram to show an example of a plurality of beam candidates for PUCCH transmission;
FIGS. 2A and 2B are each a diagram to show an example of a structure of spatial information MAC CE according to a first aspect;
FIGS. 3A and 3B are each a diagram to show an example of a structure of spatial information MAC CE according to a second aspect;
FIGS. 4A and 4B are each a diagram to show another example of the structure of the spatial information MAC CE according to the second aspect;
FIG. 5 is a diagram to show an example of a schematic structure of the radio communication system according to the present embodiment;
FIG. 6 is a diagram to show an example of an overall structure of a radio base station according to the present embodiment;
FIG. 7 is a diagram to show an example of a functional structure of the radio base station according to the present embodiment;
FIG. 8 is a diagram to show an example of an overall structure of a user terminal according to the present embodiment;
FIG. 9 is a diagram to show an example of a functional structure of the user terminal according to the present embodiment; and
FIG. 10 is a diagram to show an example of a hardware structure of the radio base station and the user terminal according to the present embodiment.

### Description of Embodiments

In the radio communication systems, it can be assumed that a plurality of user terminals are mixed in a bandwidth supported by the radio communication systems (various BW UE capabilities), it is studied to semi-statically configure one or more partial frequency bands in a carrier. Each of the frequency bands (for example, 50 MHz or 200 MHz, or the like) in the carrier is referred to as a "partial band," a "bandwidth part (BWP)," or the like.

Activation or deactivation of the BWP may be controlled. Here, activation of a BWP is a state in which the BWP is available (or to change a state into such an available state) and is also referred to as activation or enabling of a configuration of the BWP (BWP configuration) and the like. Deactivation of a BWP is a state in which the BWP is unavailable (or to change a state into such an unavailable state) and is also referred to as deactivation or disabling of BWP configuration and the like. Scheduling a BWP causes the BWP to be activated. The activated BWP is referred to as an "active BWP."

Note that a BWP used in DL communication may be referred to as a "DL BWP (DL frequency band)," and a BWP used in UL communication may be referred to as an "UL BWP (UL frequency band)." The DL BWP and UL BWP may at least partially overlap each other in frequency band. Hereinafter, the DL BWP and the UL BWP will be collectively referred to as "BWP," unless specified otherwise.

A particular BWP may be determined in advance for a user terminal. For example, a BWP in which a PDSCH to transmit system information (for example, RMSI) is scheduled (an initial active BWP or an initial BWP) may be defined by the frequency position and the bandwidth of a CORESET to which DCI scheduling the PDSCH is mapped. The same numerology as that for the RMSI may be applied to the initial BWP.

A default BWP may be determined for the user terminal. The default BWP may be the above-described initial BWP or may be configured by higher layer signaling (for example, RRC signaling).

For future radio communication systems (for example, LTE Rel. 14 or later versions, NR, 5G, or the like), it is studied to perform communications using beam forming (BF).

For example, the user terminal and/or the radio base station (for example, a gNB (gNodeB)) may use a beam to be used for transmission of a signal (also referred to as a "transmit beam," a "Tx beam," and the like) and a beam to be used for reception of a signal (also referred to as a "receive beam," a "Rx beam," and the like). A combination of a transmit beam of a transmission side and a receive beam of a reception side may be referred to as a "beam pair link (BPL)."

The user terminal and/or the radio base station may determine a beam, based on measurement of a reference RS. The reference RS (Reference Signal) may be at least one of a synchronization signal block (SSB), a channel state measurement RS (CSI-RS (Channel State Information RS)), and a sounding RS (SRS). Note that the SSB may be referred to as an "SS/PBCH (Physical Broadcast Channel) block" and the like.

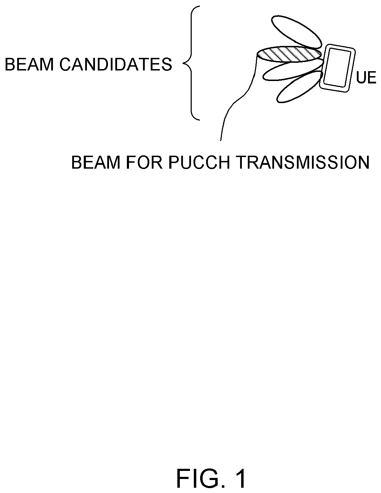

It is studied to configure a plurality of beam candidates for PUCCH transmission as those shown in FIG. 1, by PUCCH spatial relation information. The PUCCH spatial relation information is reported to a UE by a higher layer (for example, RRC signaling). The PUCCH spatial relation information may have a structure to spatially associate the reference RS and the PUCCH with each other.

A list including a plurality of pieces of PUCCH spatial relation information (PUCCH spatial relation information list) may be reported to a UE by a higher layer. The PUCCH spatial relation information list includes at least one entry (PUCCH spatial relation information, a PUCCH spatial relation information IE (Information Element)). The PUCCH spatial relation information may indicate an ID associated with the reference RS. Specifically, each piece of PUCCH spatial relation information may include at least one of an SSB index, an NZP (Non-Zero Power)-CSI-RS resource configuration ID, and an SRS resource configuration ID. The SSB index, the NZP-CSI-RS resource configuration ID, and the SRS resource configuration ID may be associated with a beam, a resource, and/or a port selected based on the measurement of the reference RS.

At least one of the plurality of pieces of PUCCH spatial relation information (for example, PUCCH-SpatialRelationInfo or beam candidates) in the PUCCH spatial relation information list may be indicated by a MAC (Medium Access Control) CE (Control Element). This MAC CE may be referred to as a "spatial information MAC CE," and a "PUCCH spatial relation information activation/deactivation (PUCCH spatial relation activation/deactivation) MAC CE." The spatial information MAC CE may indicate PUCCH spatial relation information by using an ID of PUCCH spatial relation information (a PUCCH spatial relation information ID, for example, PUCCH-SpatialRelationInfoId) in the PUCCH spatial relation information list.

The spatial information MAC CE may indicate a plurality of pieces of PUCCH spatial relation information corresponding to a plurality of respective PUCCH resource candidates that can be indicated by DCI, among the plurality of pieces of PUCCH spatial relation information in the PUCCH spatial relation information list configured by the higher layer.

In a case that the PUCCH spatial relation information list includes one PUCCH spatial relation information IE, no MAC CE may necessarily be used.

When one piece of PUCCH spatial relation information in the PUCCH spatial relation information list is determined, the UE may transmit the PUCCH, based on the PUCCH spatial relation information. In a case that the reference RS is a downlink RS (SSB or CSI-RS), the PUCCH spatial relation information is associated with the receive beam selected based on the measurement of the reference RS, the UE may transmit the PUCCH by using a transmit beam corresponding to the receive beam associated with the PUCCH spatial relation information. Alternatively, the UE may transmit the PUCCH by using a transmit beam, precoding, an antenna port, an antenna panel, and the like for which a base station receiver can assume spatial QCL (Quasi Co-Location) with a downlink RS (an SSB or a CSI-RS) associated with the PUCCH spatial relation information. In a case that the reference RS is an uplink RS (SRS), the PUCCH spatial relation information is associated with the transmit beam selected based on the measurement of the reference RS, and the UE may transmit the PUCCH by using the transmit beam associated with the PUCCH spatial relation information. Alternatively, the UE may transmit the PUCCH by using a transmit beam, precoding, an antenna port, an antenna panel, and the like for which the base station receiver can assume spatial QCL with an uplink RS (SRS) associated with the PUCCH spatial relation information. In the following, the above PUCCH spatial relation information is referred to as a "PUCCH beam," a "transmit beam," and a "beam" for simplicity.

It is studied to dynamically configure a PUCCH resource by using DCI (Downlink Control Information).

A plurality of PUCCH resource sets may be configured by a higher layer (for example, RRC signaling). Each of the PUCCH resource sets includes a plurality of PUCCH resources. To transmit UCI (Uplink Control Information) on a PUCCH, the UE determines one PUCCH resource set among the plurality of PUCCH resource sets, based on the payload of the UCI. The UE determines one PUCCH resource from the determined PUCCH resource set, based on a PUCCH resource indication.

The PUCCH resource indication may be a DCI indication (particular field in the DCI), may be a particular parameter (an implicit indication), or may be a combination of these. The particular parameter may be at least one of a CCE (Control Channel Element) index, a particular PRB (Physical Resource Block) index of a scheduled PDSCH, a UE-ID, and a C-RNTI (Cell-Radio Network Temporary Identifier).

The UE may determine a PUCCH resource, based on the type of UCI. For example, in a case that the UCI is only CSI (Channel State Information), the UE may determine one PUCCH resource for CSI configured by a higher layer. For example, in a case that the UCI is an HARQ-ACK, the UE may determine a PUCCH resource set among a plurality of PUCCH resource sets for an HARQ-ACK configured by a higher layer, based on the number of bits of the HARQ-ACK, and determine a PUCCH resource from a particular field in DCI scheduling a PDSCH corresponding to the HARQ-ACK.

However, it is not determined yet how to report the association between the PUCCH resource and the PUCCH spatial relation information to the UE. If this association is not reported appropriately, a beam appropriate for the PUCCH is not used, which may reduce the performance.

In view of this, the inventors of the present invention have studied structures of a MAC CE for controlling a beam for PUCCH transmission and thereby reached the present invention.

An embodiment according to the present disclosure will be described in detail with reference to the drawings as follows. Aspects may be employed independently or may be employed in combination.

### (First Aspect)

A spatial information MAC CE may perform activation (enabling) or deactivation (disabling) of PUCCH spatial relation information reported by a higher layer. The spatial information MAC CE may be identified based on a MAC PDU (Protocol Data Unit) subheader having a LCID (Logical Channel Identifier) corresponding to PUCCH spatial relation information activation/deactivation. The spatial information MAC CE may have a fixed size (for example, 24 bits).

The spatial information MAC CE may include at least one of fields (1) to (6) below.
(1) Serving cell ID: This field indicates an identifier of a serving cell to which the MAC CE is to be applied. The length of this field is, for example, 5 bits.
(2) BWP ID: This field may include a BWP-ID of a UL BWP to which the MAC CE is to be applied. When this field includes a BWP-ID of a UL BWP to which the MAC CE is to be applied, the length of this field is, for example, 2 bits.

This field may be one of options 1 to 3 below.
- Option 1: This field includes a BWP-ID of a UL BWP to which the MAC CE is to be applied. In this case, the UE recognizes the BWP indicated in this field as a UL BWP to which the MAC CE is to be applied.
- Option 2: This field does not include a BWP-ID of a UL BWP to which the MAC CE is to be applied. In this case, the UE recognizes that a UL BWP to which the MAC CE is to be applied is only an active BWP. According to option 2, even when the MAC CE does not include any BWP ID, the UE can apply the MAC CE to the PUCCH in the active BWP.
- Option 3: This field does not include a BWP-ID of a UL BWP to which the MAC CE is to be applied. In this case, the UE recognizes that a UL BWP to which the MAC CE is to be applied is an active BWP and an initial BWP and/or a default BWP. According to option 3, even when the MAC CE does not include any BWP ID, the UE can apply the MAC CE to the PUCCHs in the active BWP and the initial BWP and/or the default BWP.

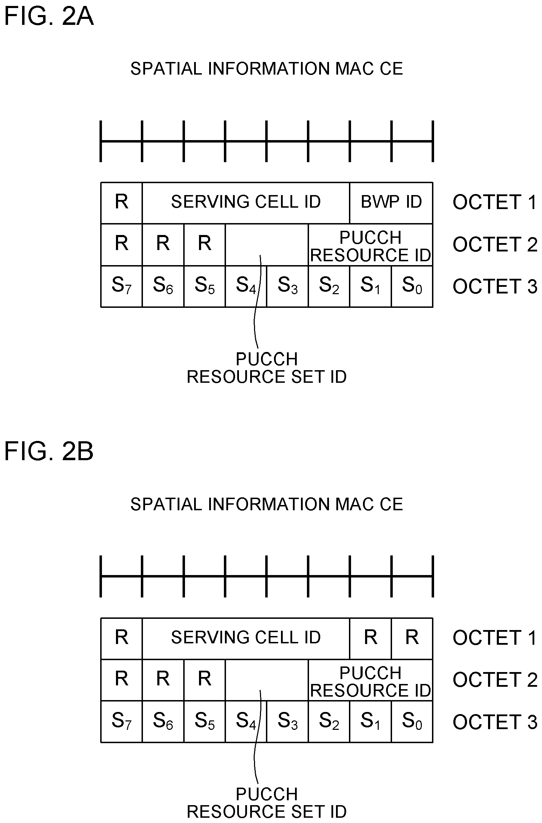

FIG. 2A shows a structure of the spatial information MAC CE in a case of using option 1 of field (2). FIG. 2B shows a structure of the spatial information MAC CE in a case of using option 2 or option 3 of field (2). In the case of using option 2 or option 3 of field (2), the spatial information MAC CE may not necessarily include field (2), may include field (2) indicating a certain value or an invalid value, or may include a reserved bit(s) instead of field (2). In a case that the spatial information MAC CE does not include field (2) in option 2 or option 3 of field (2), the size of the spatial information MAC CE can be reduced.

(3) PUCCH resource set ID: This field includes an identifier of a PUCCH resource set identified by a higher layer parameter (for example, a PUCCH-ResourceSetId). The length of this field is, for example, 2 bits. Alternatively, this field may be for indicating one or a plurality of PUCCH resource sets by using a bitmap. In this case, by assuming, for example, that four PUCCH resource sets can be configured at maximum, the length of this field is, for example, 4 bits.

(4) PUCCH resource ID: This field includes an identifier of a PUCCH resource identified by a higher layer parameter (for example, a PUCCH-ResourceSetId). The length of this field is, for example, 3 bits. Alternatively, this field may be for indicating one or a plurality of PUCCH resources by using a bitmap. In this case, by assuming, for example, that 32 PUCCH resources can be configured at maximum per PUCCH resource set, the length of this field is, for example, 32 bits.

(5) Sᵢ: If there is PUCCH spatial relation information configured for the UL BWP indicated by the BWP-ID field (or the UL BWP determined in option 2 or 3) and having PUCCH spatial relation information ID i, Sᵢ indicates an activation state of the PUCCH spatial relation information having PUCCH spatial relation information ID i. Otherwise, the MAC entity ignores this field.

An Sᵢ field is set at "1" to indicate that the PUCCH spatial relation information having PUCCH spatial relation information ID i is to be activated. Moreover, the Sᵢ field is set at "0" to indicate that the PUCCH spatial relation information having PUCCH spatial relation information ID i is to be deactivated. At a certain time point, only one piece of PUCCH spatial relation information may be active for one PUCCH resource. In other words, only one of a plurality of Sᵢ fields may be set at "1." The plurality of Sᵢ fields may be a bitmap indicating the PUCCH spatial relation information to be applied to the PUCCH resource(s) specified by the PUCCH resource ID(s).

The number of the plurality of Sᵢ fields may be equal to or longer than the number of pieces of PUCCH spatial information (the number of entries) in the PUCCH spatial relation information list. The length of the Sᵢ fields may be a fixed value equal to or greater than the number of pieces of PUCCH spatial information in the PUCCH spatial relation information list.

(6) R (reserved bit): R is set at "0."

The spatial information MAC CE may include a field for the initial BWP and/or the default BWP and a field for the active BWP, for at least one of fields (3), (4), and (5). The spatial information MAC CE may include a field for the initial BWP, a field for the default BWP, and a field for the active BWP, for at least one of fields (3), (4), and (5).

According to the first aspect, it is possible to associate PUCCH spatial relation information with an appropriate BWP(s) and PUCCH resource(s).

### (Second Aspect)

The spatial information MAC CE may include at least one of fields (7) and (8) below. The spatial information MAC CE may include at least one of fields (7) and (8) instead of at least one of fields (4) and (5) .

(7) Cⱼ: A Cⱼ field is set at "1" to indicate that the MAC CE is to be applied to the PUCCH resource having PUCCH resource ID j in the PUCCH resource set specified by the MAC CE. The Cⱼ field is set at "0" to indicate that the MAC CE is not to be applied to a PUCCH resource having PUCCH resource ID j in the specified PUCCH resource set.

A plurality of Cⱼ fields is a bitmap indicating PUCCH resources to which the MAC CE is to be applied in the PUCCH resource set specified by the MAC CE. The number of the plurality of Cⱼ fields may be equal to or longer than the number of PUCCH resources in the PUCCH resource set. The length of the Cⱼ fields may be a fixed value equal to or greater than the number of PUCCH resources in the PUCCH resource set.

(8) PUCCH relation information ID: This field may indicate PUCCH relation information for the j-th PUCCH resource corresponding to Cⱼ indicating "1" in the PUCCH resource set specified by the MAC CE.

The spatial information MAC CE may include a field for the initial BWP and/or the default BWP and a field for the active BWP, for at least one of fields (3), (7), and (8). The spatial information MAC CE may include a field for the initial BWP, a field for the default BWP, and a field for the active BWP, for at least one of fields (3), (7), and (8).

The plurality of Cⱼ fields may indicate only one PUCCH resource. In other words, only one of the plurality of Cⱼ fields may indicate "1."

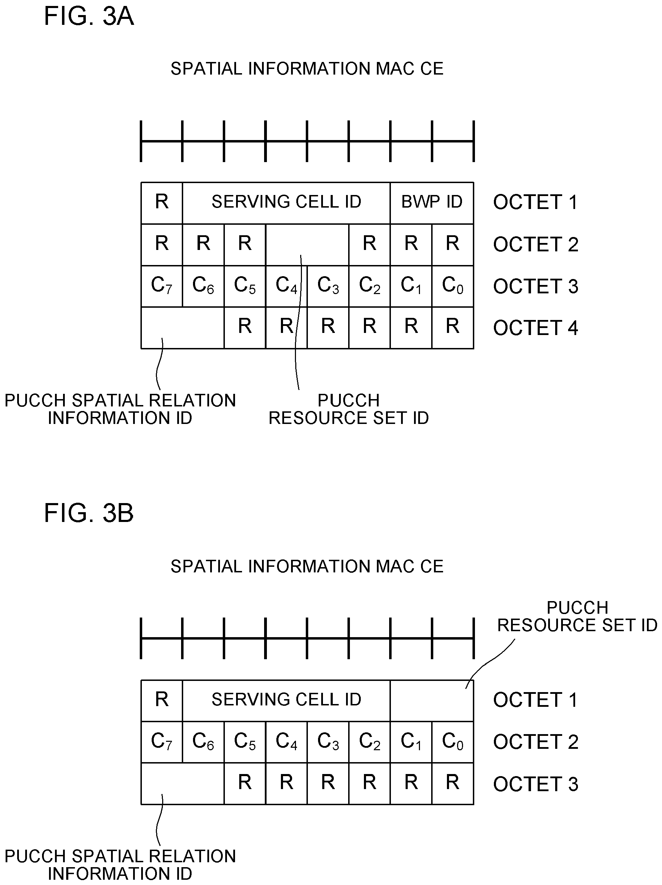

FIG. 3A shows a structure of the spatial information MAC CE in a case of using option 1 of field (2). FIG. 3B shows a structure of the spatial information MAC CE in a case of using option 2 or option 3 of field (2). In the case of using option 2 or option 3 of field (2), the spatial information MAC CE may not necessarily include field (2), may include field (2) indicating a certain value or an invalid value, or may include a reserved bit(s) instead of field (2). In a case that the spatial information MAC CE does not include field (2) in option 2 or option 3 of field (2), the size of the spatial information MAC CE can be reduced.

The plurality of Cⱼ fields may indicate one or more PUCCH resources. In other words, one or more the plurality of Cⱼ fields may indicate "1." In this case, the number of PUCCH relation information ID fields may be equal to the number of Cⱼ fields indicating 1. The plurality of PUCCH relation information ID fields may be arranged in descending or ascending order of corresponding PUCCH resource IDs.

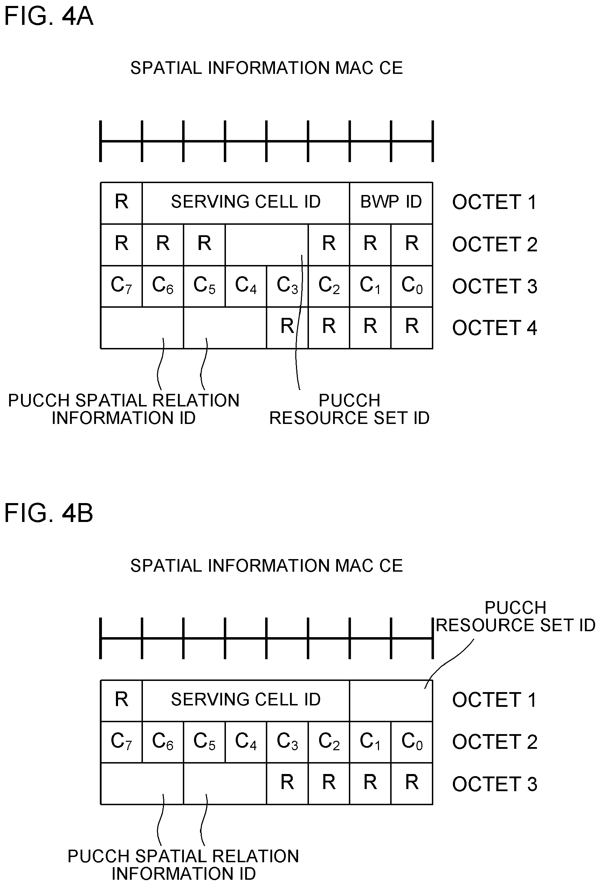

FIG. 4A shows a structure of the spatial information MAC CE in a case of using option 1 of field (2). FIG. 4B shows a structure of the spatial information MAC CE in a case of using option 2 or option 3 of field (2). In the case of using option 2 or option 3 of field (2), the spatial information MAC CE may not necessarily include field (2), may include field (2) indicating a certain value or an invalid value, or may include a reserved bit(s) instead of field (2). In a case that the spatial information MAC CE does not include field (2) in option 2 or option 3 of field (2), the size of the spatial information MAC CE can be reduced.

The granularity of timing for control of a beam for a PUCCH by a MAC CE is coarser than the granularity of timing for control of a PUCCH resource by using DCI. By specifying, using a spatial information MAC CE, in advance a piece(s) of PUCCH spatial relation information for one or more PUCCH resources that can be configured dynamically, the UE can control a beam for a PUCCH configured dynamically.

According to the second aspect, it is possible to associate PUCCH spatial relation information with an appropriate BWP(s) and PUCCH resource(s).

### (Radio Communication System)

Hereinafter, a structure of a radio communication system according to the present embodiment will be described. In this radio communication system, communication is performed by using at least one of combinations of the above-described plurality of aspects.

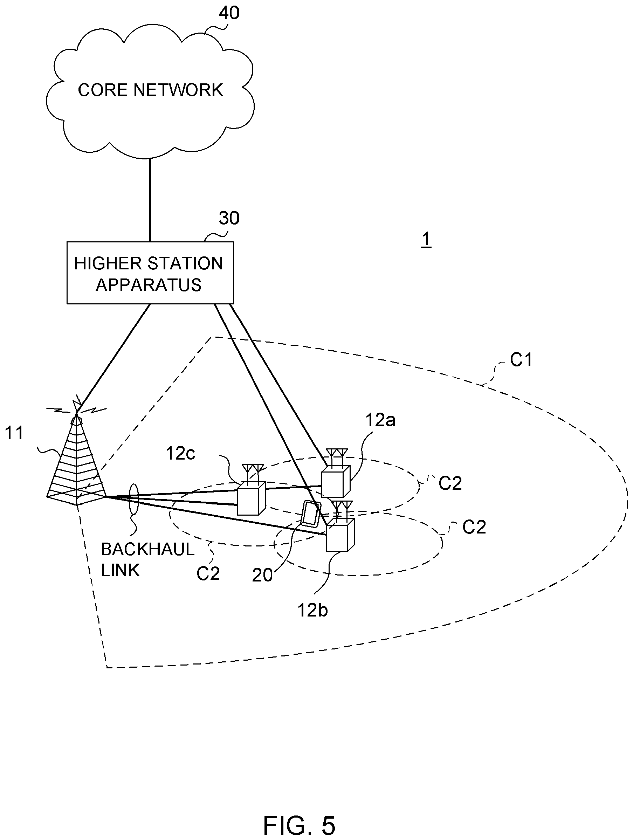

FIG. 5 is a diagram to show an example of a schematic structure of the radio communication system according to the present embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 can execute CA or DC by using a plurality of cells (CCs) (for example, five or fewer CCs or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier," and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

Numerologies may be communication parameters applied to transmission and/or reception of a certain signal and/or channel, and for example, may indicate at least one of a subcarrier spacing, a bandwidth, a symbol length, a cyclic prefix length, a subframe length, a TTI length, the number of symbols per TTI, a radio frame structure, filtering processing, windowing processing, and so on.

A wired connection (for example, means in compliance with the CPRI (Common Public Radio Interface) such as an optical fiber, an X2 interface, and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME), and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point," and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points," and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels, and so on, are used as downlink channels. User data, higher layer control information, SIBs (System Information Blocks), and so on are communicated on the PDSCH. The MIBs (Master Information Blocks) are communicated on the PBCH.

The downlink L1/L2 control channels include at least one of a downlink control channel (a PDCCH (Physical Downlink Control Channel) and/or an EPDCCH (Enhanced Physical Downlink Control Channel)), a PCFICH (Physical Control Format Indicator Channel), and a PHICH (Physical Hybrid-ARQ Indicator Channel). Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)), and so on are used as uplink channels. User data, higher layer control information, and so on are communicated on the PUSCH. In addition, radio link quality information (CQI (Channel Quality Indicator)) of the downlink, transmission confirmation information, a scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### <Radio Base Station>

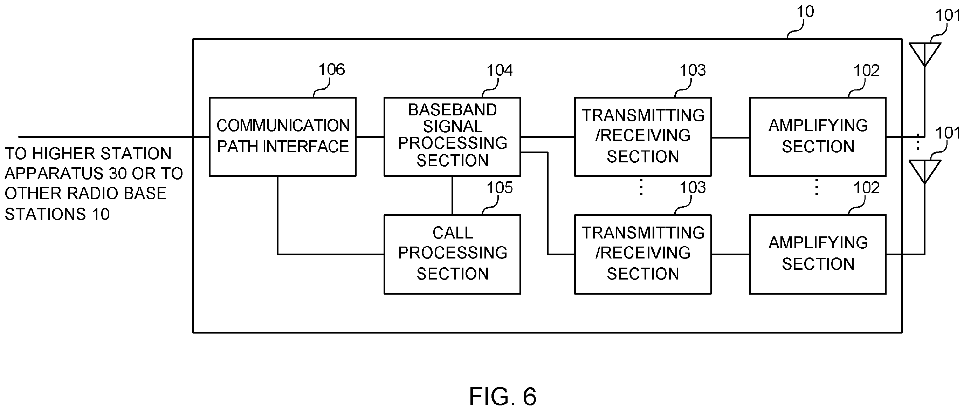

FIG. 6 is a diagram to show an example of an overall structure of the radio base station according to the present embodiment. A radio base station 10 includes a plurality of transmitting/receiving antennas 101, amplifying sections 102, transmitting/receiving sections 103, a baseband signal processing section 104, a call processing section 105, and a transmission line interface 106. Note that the radio base station 10 may be configured to include one or more transmitting/receiving antennas 101, one or more amplifying sections 102, and one or more transmitting/receiving sections 103.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing, and so on) for communication channels, manages the state of the radio base station 10, manages the radio resources, and so on.

The transmission line interface 106 transmits and/or receives signals to and/or from the higher station apparatus 30 via a certain interface. The transmission line interface 106 may transmit and/or receive signals (backhaul signaling) with other radio base stations 10 via an inter-base station interface (for example, an optical fiber in compliance with the CPRI (Common Public Radio Interface) and an X2 interface).

Note that each of the transmitting/receiving sections 103 may further include an analog beam forming section that performs analog beam forming. The analog beam forming section can be constituted with an analog beam forming circuit (for example, a phase shifter or a phase-shift circuit) or an analog beam forming apparatus (for example, a phase-shift device) described based on general understanding of the technical field to which the present invention pertains. The transmitting/receiving antennas 101 can be constituted with array antennas, for example. The transmitting/receiving sections 103 are structured to be able to adopt single BF and multi-BF.

The transmitting/receiving sections 103 may transmit and/or receive a signal by using a certain beam determined by the control section 301.

The transmitting/receiving sections 103 may transmit a plurality of pieces of spatial relation information related to spatial resources for an uplink control channel, by a higher layer. The plurality of pieces of spatial relation information may be a PUCCH spatial relation information list. The transmitting/receiving sections 103 may transmit indication information indicating at least one piece of spatial relation information corresponding to at least one uplink control channel resource among the plurality of pieces of spatial relation information, by using a medium access control-control element (MAC CE).

The transmitting/receiving sections 103 may transmit downlink control information (DCI) and/or another parameter for determining one uplink control channel resource in the uplink control channel resource set.

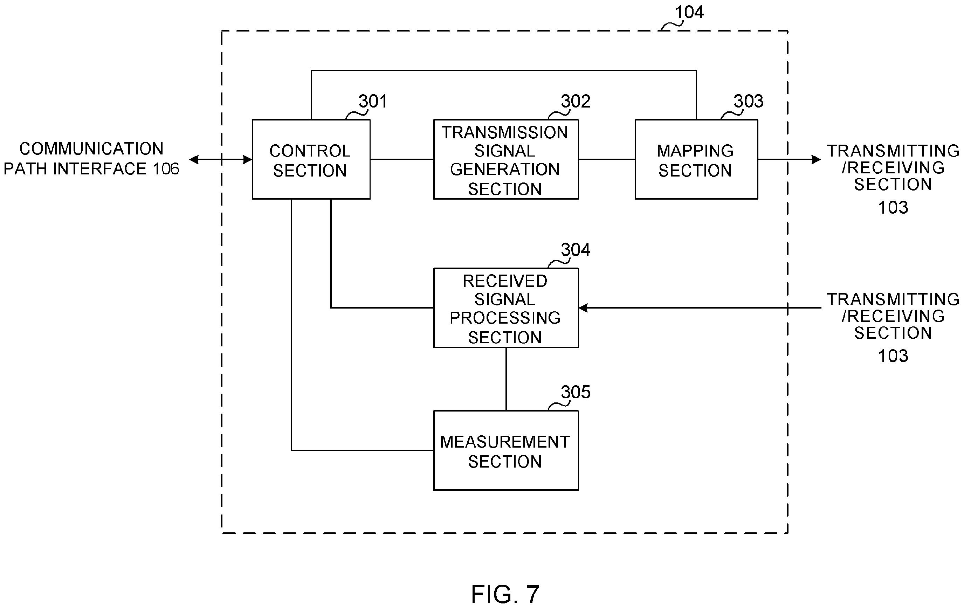

FIG. 7 is a diagram to show an example of a functional structure of the radio base station according to the present embodiment. Note that, the present example primarily shows functional blocks that pertain to characteristic parts of the present embodiment, and it may be assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit, or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH, such as transmission confirmation information). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, a PSS/SSS), a downlink reference signal (for example, a CRS, CSI-RS, DMRS), and so on.

The control section 301 may control the forming of a transmit beam and/or a receive beam through digital BF (for example, precoding) by the baseband signal processing section 104 and/or analog BF (for example, phase rotation) by the transmitting/receiving sections 103.

The transmission signal generation section 302 generates downlink signals (downlink control signals, downlink data signals, downlink reference signals, and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing, modulation processing, and the like are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding, and so on) of received signals that are input from the transmitting/receiving sections 103. Here, the received signals are, for example, uplink signals that are transmitted from the user terminals 20 (uplink control signals, uplink data signals, uplink reference signals, and so on). The received signal processing section 304 can be constituted with a signal processor, a signal processing circuit, or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit, or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

### <User Terminal>

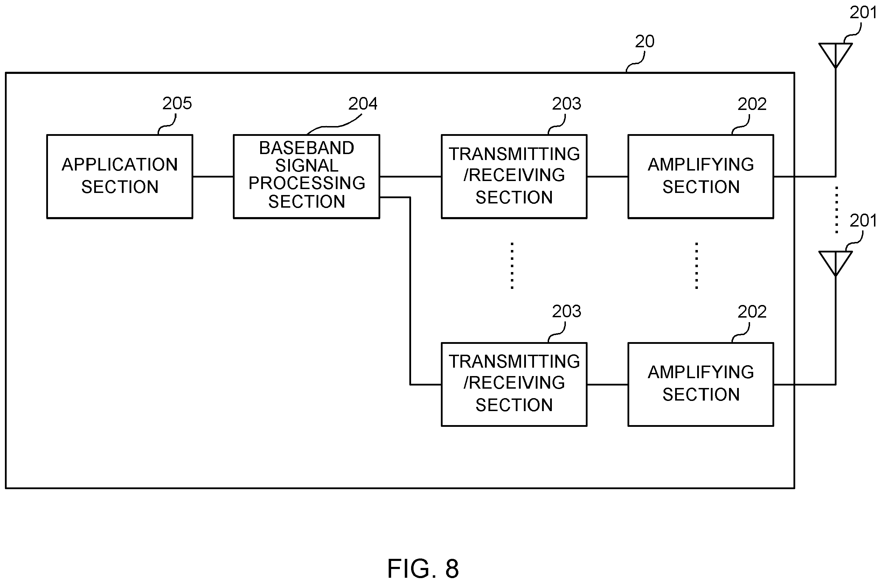

FIG. 8 is a diagram to show an example of an overall structure of a user terminal according to the present embodiment. A user terminal 20 includes a plurality of transmitting/receiving antennas 201, amplifying sections 202, transmitting/receiving sections 203, a baseband signal processing section 204, and an application section 205. Note that the user terminal 20 may be configured to include one or more transmitting/receiving antennas 201, one or more amplifying sections 202, and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

Note that each of the transmitting/receiving sections 203 may further include an analog beam forming section that performs analog beam forming. The analog beam forming section can be constituted with an analog beam forming circuit (for example, a phase shifter or a phase-shift circuit) or an analog beam forming apparatus (for example, a phase-shift device) described based on general understanding of the technical field to which the present invention pertains. The transmitting/receiving antennas 201 can be constituted with array antennas, for example. The transmitting/receiving sections 203 may be structured to be able to adopt single BF and multi-BF.

The transmitting/receiving sections 203 may transmit and/or receive a signal by using a certain beam determined by the control section 401.

The transmitting/receiving sections 203 may receive, by a higher layer (for example, RRC signaling), a plurality of pieces of spatial relation information related to spatial resources (for example, beams) for an uplink control channel (PUCCH), and receive, through a medium access control-control element (MAC CE), indication information indicating at least one piece of spatial relation information associated with at least one uplink control channel resource (PUCCH resource) (for example, a spatial information MAC CE or a PUCCH spatial relation information activation/deactivation MAC CE), among the plurality of pieces of spatial relation information. The plurality of pieces spatial relation information are, for example, a PUCCH spatial relation information list. The spatial relation information is, for example, PUCCH spatial relation information.

The transmitting/receiving sections 203 may receive configuration information of a partial band. The transmitting/receiving sections 203 may receive configuration information of an uplink control channel resource set (PUCCH resource set).

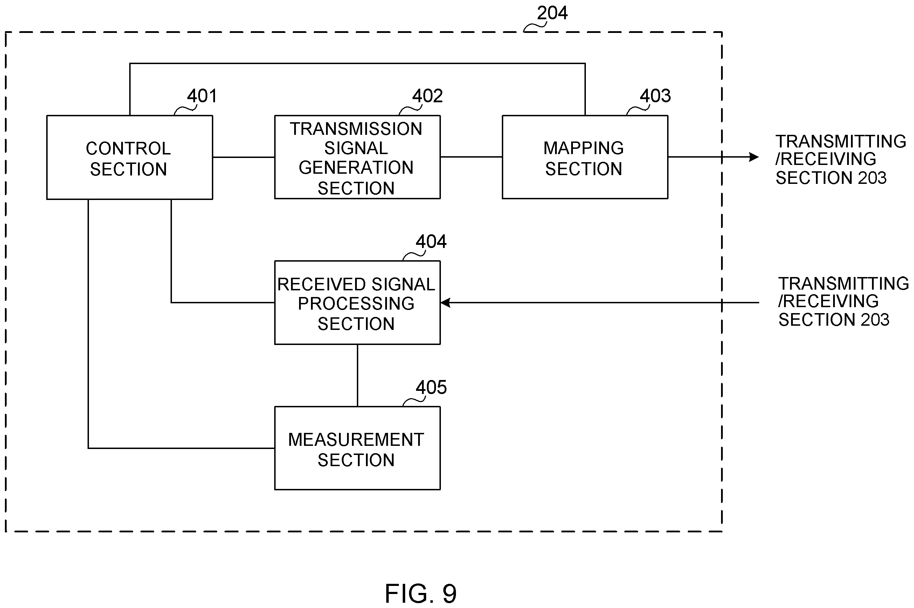

FIG. 9 is a diagram to show an example of a functional structure of a user terminal according to the present embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404, and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit, or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401 may control the forming of a transmit beam and/or a receive beam through digital BF (for example, precoding) by the baseband signal processing section 204 and/or analog BF (for example, phase rotation) by the transmitting/receiving sections 203.

The control section 401 may control radio link monitoring (RLM) and/or beam recovery (BR), based on results of measurements by the measurement section 405.

The control section 401 may determine a partial band to which indication information is to be applied, and control transmission of an uplink control channel in the partial band by using at least one piece of spatial relation information and at least one uplink control channel resource.

The indication information may not necessarily include information indicating a partial band. The control section 401 may determine, as a partial band, at least one of an active partial band, an initial partial band, and a default partial band.

The indication information may include an identifier of an uplink control channel resource set including at least one uplink control channel resource and a bitmap indicating at least one uplink control channel resource.

The indication information may include an identifier of spatial relation information associated with at least one uplink control channel resource.

The bitmap may indicate a plurality of uplink control channel resources to which the indication information is to be applied. The indication information may include an identifier of a plurality of pieces of spatial relation information associated with the plurality of respective uplink control channel resources.

The control section 401 may determine one of a plurality of uplink control channel resource sets, based on uplink control information (UCI) transmitted on an uplink control channel. The control section 401 may determine one uplink control channel resource from the uplink control channel resource set, based on downlink control information (DCI).

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit, or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit, or mapping apparatus that can be described based on general understanding of the technical field to which the present disclosure pertains.

The received signal processing section 404 performs receiving processes (for example, demapping, demodulation, decoding, and so on) of received signals that are input from the transmitting/receiving sections 203. Here, the received signals are, for example, downlink signals transmitted from the radio base station 10 (downlink control signals, downlink data signals, downlink reference signals, and so on). The received signal processing section 404 can be constituted with a signal processor, a signal processing circuit, or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI, and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit, or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, and SNR), a signal strength (for example, RSSI), channel information (for example, CSI), and so on. The measurement results may be output to the control section 401.

### <Hardware Structure>

Note that the block diagrams that have been used to describe the present embodiment show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

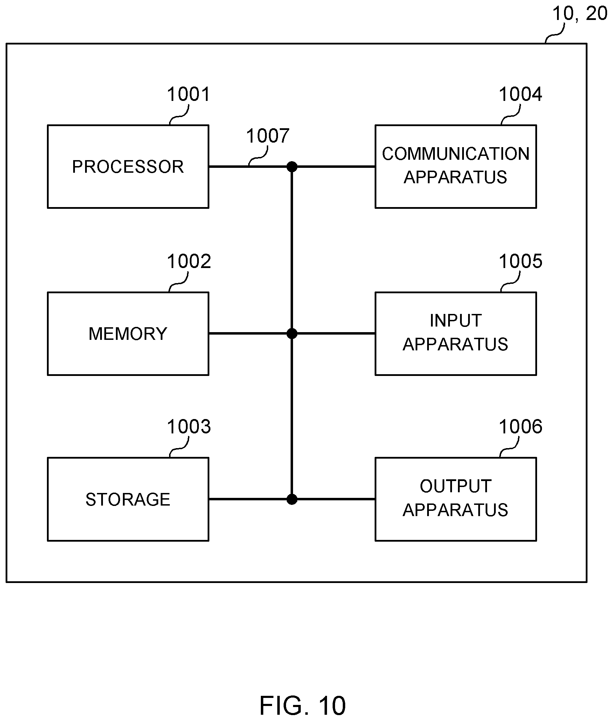

For example, a radio base station, a user terminal, and so on according to present embodiment may function as a computer that executes the processes of the radio communication method of each aspect of the present embodiment. FIG. 10 is a diagram to show an example of a hardware structure of the radio base station and the user terminal according to the present embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of pieces apparatus shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the present embodiment described above are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)," and so on. The memory 1002 can store executable programs (program codes), software modules, and/or the like for implementing a radio communication method according to the present embodiment.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented with the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency," and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," and so on. A TTI that is shorter than a normal TTI may be referred to as a "shortened TTI," a "short TTI," a "partial or fractional TTI," a "shortened subframe," a "short subframe," a "mini-slot," a "sub-slot," and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair," and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects / present embodiment described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell," and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/ present embodiment of the present disclosure may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects / present embodiment illustrated in this specification may be used individually or in combinations, which may be switched depending on the mode of implementation. The order of processes, sequences, flowcharts, and so on that have been used to describe the aspects / present embodiment herein may be re-ordered as long as inconsistencies do not arise. For example, although various methods have been illustrated in this specification with various components of steps in exemplary orders, the specific orders that are illustrated herein are by no means limiting.

The aspects / present embodiment illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Although the present invention has been described in detail above, it should be obvious to a person skilled in the art that the present invention is by no means limited to the present embodiment described in this specification. The present invention can be implemented with various corrections and in various modifications, without departing from the spirit and scope of the present invention defined by the recitations of claims. Consequently, the description in this specification is provided only for the purpose of explaining examples, and should by no means be construed to limit the present invention in any way.

## Claims

1. A user terminal comprising:
a receiving section that receives, by a higher layer, a plurality of pieces of spatial relation information related to spatial resources for an uplink control channel, and receives, through a medium access control-control element, indication information indicating at least one piece of spatial relation information associated with at least one uplink control channel resource among the plurality of pieces of spatial relation information; and
a control section that determines a partial band to which the indication information is applied, and controls transmission of an uplink control channel in the partial band by using the at least one piece of spatial relation information and the at least one uplink control channel resource.

2. The user terminal according to claim 1, wherein
the indication information does not include information indicating the partial band, and
the control section determines, as the partial band, at least one of an active partial band, an initial partial band, and a default partial band.

3. The user terminal according to claim 1 or 2, wherein
the indication information includes an identifier of an uplink control channel resource set including the at least one uplink control channel resource and a bitmap indicating the at least one uplink control channel resource.

4. The user terminal according to claim 3, wherein
the indication information includes an identifier of spatial relation information associated with the at least one uplink control channel resource.

5. The user terminal according to claim 3, wherein
the bitmap indicates a plurality of uplink control channel resources to which the indication information is to be applied, and
the indication information includes identifiers of a plurality of pieces of spatial relation information associated with the plurality of respective uplink control channel resources.

6. A radio communication method of a user terminal, the radio communication method comprising:
receiving, by a higher layer, a plurality of pieces of spatial relation information related to spatial resources for an uplink control channel, and receiving, through a medium access control-control element, indication information indicating at least one piece of spatial relation information associated with at least one uplink control channel resource among the plurality of pieces of spatial relation information; and
determining a partial band to which the indication information is applied, and controlling transmission of an uplink control channel in the partial band by using the at least one piece of spatial relation information and the at least one uplink control channel resource.
